# FASCICULE DE BREVET EUROPEEN

(11) **EP 0 576 321 B1**
(45) Date de publication et mention de la délivrance du brevet: **08.09.1999**
(21) Numéro de dépôt: 93401488.7
(22) Date de dépôt: 10.06.1993
(51) Int. Cl.: C09K 21/14, C09D 5/18

(54) **Dispositif de protection antifeu en matériau souple endothermique**
Feuerbeständige Vorrichtung die ein flexibles endothermisches Material enthält
Fire-proof protecting device comprising a flexible endothermic material

(30) Priorité: 24.06.1992 FR 9207745
(43) Date de publication de la demande: 29.12.1993
(73) Titulaire: AEROSPATIALE Société Nationale Industrielle, 75781 Paris Cédex 16 (FR)
(72) Inventeur: Metivaud, Guy, F-33400 Talence (FR); Decidour, Jean-Claude, F-33480 Castelnau de Medoc (FR); Vignollet, Michel, F-33185 Le Haillan (FR)
(74) Mandataire: Bonnetat, Christian

(56) Documents cités:
- EP-A- 0 347 309
- EP-A- 0 391 000
- DE-A- 2 905 610
- GB-A- 1 497 659
- GB-A- 2 120 580
- US-A- 4 273 821

## Description

La présente invention concerne un dispositif de protection antifeu, réalisé à partir d'un matériau souple à propriétés endothermiques.

Par le document FR-A-2 632 866, on connaît déjà un matériau de protection antifeu incorporant une charge active endothermique, telle que le borax (tétraborate disodique décahydraté). Sous l'action de la chaleur, cette charge active se décompose en libérant de l'eau, qui se vaporise à la surface dudit matériau. La vaporisation s'effectuant de façon endothermique, il en résulte un abaissement de la température superficielle dudit matériau. De plus, les propriétés intumescentes du matériau renforcent les propriétés isolantes de celui-ci pendant les agressions thermiques.

Lorsque, avec un tel matériau, on désire réaliser un dispositif de protection antifeu (plaque, gaine, coque, etc ...), on est confronté à la difficulté provenant du fait que, sous l'action du feu, ledit matériau peut dans certains cas se casser, de sorte que des morceaux dudit dispositif se détachent du reste de celui-ci, en réduisant ainsi la protection des objets devant être protégés du feu par ledit dispositif de protection.

Par ailleurs, pour certaines applications, il est nécessaire d'augmenter l'effet antifeu d'un tel matériau. Pour ce faire, il apparaît avantageux de renforcer l'intumescence dudit matériau. Cependant, si l'on incorpore un agent intumescent audit matériau, on augmente la fragilité de celui-ci du fait de l'augmentation de volume de l'agent intumescent sous l'action du feu. Par ailleurs, si l'on recouvre la surface dudit matériau avec un agent intumescent, par exemple sous forme de peinture, l'adhérence dudit agent intumescent sur ledit matériau est très faible, de sorte que sous l'action du feu et/ou d'une déformation mécanique, la couche superficielle dudit agent intumescent se sépare au moins partiellement dudit dispositif de protection, laissant le matériau de ce dernier au contact direct du feu avec les effets de dégradation décrits ci-dessus.

La présente invention a pour objet de remédier à ces inconvénients et de permettre la réalisation d'un dispositif de protection antifeu présentant des propriétés endothermiques et intumescentes améliorées.

A cette fin, selon l'invention, le dispositif de protection antifeu comportant un corps souple de matériau à propriétés endothermiques comprenant un liant de silicone et une charge libérant de la vapeur d'eau sous l'action du feu, est remarquable en ce qu'il comporte, sur au moins la face dudit corps destinée à être dirigée vers le feu, au moins une couche d'un tissu constitué de fibres résistant au feu et imprégné d'un agent intumescent.

Ainsi, ledit tissu sert d'armature pour l'accrochage dudit agent intumescent sur le matériau à propriétés endothermiques. L'adhérence dudit agent intumescent sur ledit matériau est donc particulièrement bonne. Par ailleurs, ledit tissu forme une armature mécanique empêchant ledit matériau à propriétés endothermiques de se détériorer, morceau par morceau. L'expérience a montré que, sous l'action du feu, le tissu imprégné de l'agent intumescent forme une coque rigide et dilatée, qui maintient le matériau endothermique sous-jacent et dont la porosité est suffisante pour être traversée par la vapeur engendrée par ledit matériau à propriétés endothermiques.

Le tissu sert donc, simultanément, à l'accrochage de l'agent intumescent sur le matériau endothermique et au maintien de l'intégrité de ce dernier, tout en permettant le dégagement de la vapeur engendrée par ledit matériau endothermique.

De préférence, le tissu, utilisé dans la mise en oeuvre de la présente invention, est réalisé en fibres organiques préoxydées carbonisables, capables d'absorber fortement le flux thermique infrarouge d'un incendie. Un tel tissu est de préférence du type à mailles pour présenter de grandes propriétés d'élasticité susceptibles de permettre le gonflement de l'agent intumescent, et lesdites fibres organiques peuvent être à base de polyacrylonitdle. D'autres fibres, telles que des fibres aramides, peuvent être prévues pour faciliter le tissage. De tels tissus sont par exemple fabriqués et vendus, sous le nom commercial MONTSEGUR, par la Société Arlégeoise de Bonneterie, 09300 Montferrier, France.

Avantageusement, ledit agent intumescent se présente, avant imprégnation dudit tissu, sous la forme d'un liquide aqueux et, après imprégnation et séchage, sous la forme d'un revêtement souple. Ainsi, ledit agent intumescent ne peut dégager de vapeurs toxiques sous l'action du feu.

Un tel agencement intumescent peut être celui fabriqué et vendu, sous le nom commercial ORGOL FS, par la Société 3M, 95006 Cergy-Pontoise Cedex, France.

Pour réaliser le dispositif de protection antifeu conforme à la présente invention, on peut, séparément fabriquer le corps du matériau souple à propriétés endothermiques et préparer le tissu imprégné par l'agent intumescent, puis solidariser celui-ci sur ledit corps. Une telle solidarisation est de préférence réalisée par une colle silicone, par exemple celle connue sous le nom commercial CAF 730, fabriquée et vendue parla Société française RHONE-POULENC. Une telle colle silicone est avantageuse, car elle polymérise en présence d'eau, et donc en présence de l'agent intumescent aqueux préféré.

La colle silicone peut être appliquée entre le corps du matériau à propriétés endothermiques et le tissu imprégné de l'agent intumescent. Elle peut également être mélangée audit agent intumescent avant imprégnation dudit tissu. Dans ce dernier cas, l'imprégnation dudit tissu se fait avec un mélange d'agent intumescent et de colle silicone comportant au moins 15% en poids de colle silicone.

En variante, le dispositif de protection antifeu conforme à la présente invention pourrait être obtenu par moulage du corps en matériau souple à propriétés endothermiques sur ledit tissu imprégné par l'agent intumescent, de préférence mélangé à ladite colle silicone.

Avantageusement, la charge, incorporée audit matériau à propriétés endothermiques et libérant de la vapeur d'eau sous l'action du feu, est du phosphate trisodique à 12 molécules d'eau.

Pour que ledit corps puisse être facilement moulé à la forme désirée (plaque, coque, gaine, tube, etc ...), ledit matériau comporte de façon connue un liant de silicone. De plus, une charge de renforcement réfractaire, compatible avec ledit liant de silicone, peut être prévue.

Une composition préférée pour le matériau dudit corps souple est la suivante :
- liant élastomère de silicone, de préférence celui portant la référence RTV 141 de la Société RHONE-POULENC 100 parties en poids
- charge de renforcement réfractaire, de préférence du TiO2 7 parties en poids
- charge endothermique, à savoir du phosphate trisodique à 12 molécules d'eau 110 parties en poids
- catalyseur du liant élastomère de silicone 10 parties en poids

Pour montrer l'efficacité antifeu du dispositif de protection conforme à la présente invention, on a fabriqué des gaines tubulaires G1, G2 et G3 pour la protection de conduites, dont seule la gaine G3 est conforme à la présente invention, et on a procédé à des essais comparatifs.

Les figures annexées sont destinées à illustrer ces essais.

Les figures 1, 2 et 3 sont des coupes des gaines antifeu G1, G2 et G3, fabriquées en vue d'essais comparatifs d'isolation thermique.

La figure 4 montre schématiquement un équipement permettant de réaliser les essais comparatifs d'isolation thermique sur les gaines des figures 1, 2 et 3.

La figure 5 illustre les résultats des essais d'isolation thermique, menés avec l'équipement de la figure 4.

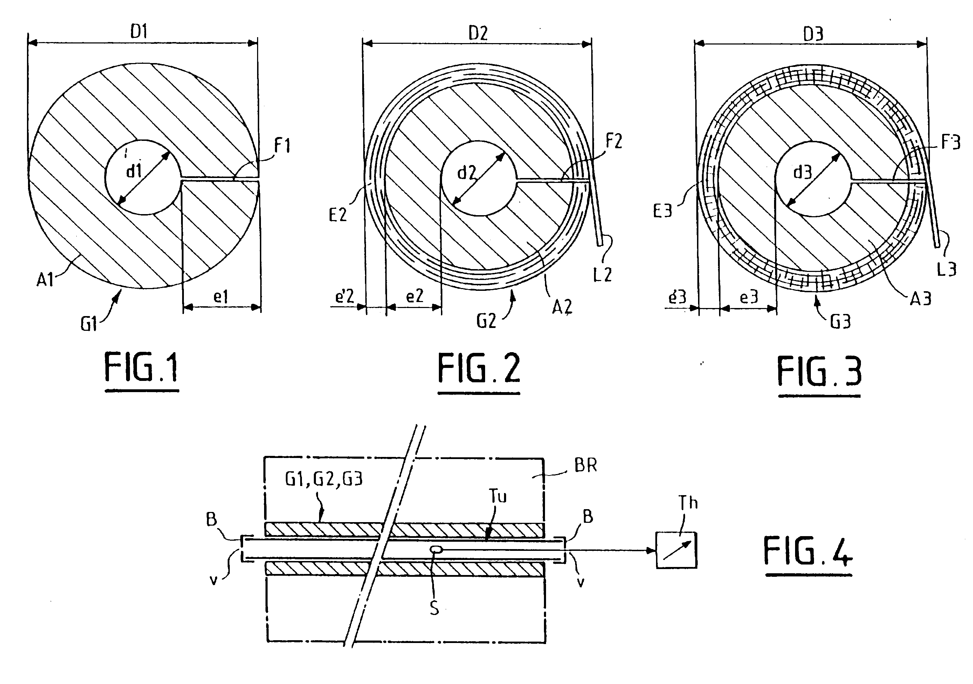

Comme l'illustrent en section les figures 1, 2 et 3, à des fins d'essais comparatifs, on réalise trois gaines tubulaires G1, G2 et G3, destinées à protéger des conduites métalliques contre l'incendie.

La gaine G1 (voir la figure 1) est constituée uniquement d'un corps A1 de matière endothermique souple, dont la composition est par exemple la suivante :
- élastomère de silicone RTV 141 100 parties en poids
- TiO2 7 parties en poids
- phosphate trisodique à 12 molécules d'eau 110 parties en poids
- catalyseur de l'élastomère de silicone 10 parties en poids

Les gaines G2 et G3 (voir les figures 2 et 3) comportent des corps souples A2 ou A3, respectivement entourés superficiellement d'un enroulement de tissu à mailles E2 ou E3 en fibres préoxydées carbonisables Montségur.

Les corps souples A2 et A3 sont réalisés dans la même matière endothermique que celle constituant la gaine G1 et dont la composition est donnée ci-dessus.

L'enroulement de tissu E2 de la gaine G2 est imprégné de silicone, alors que l'enroulement de tissu E3 de la gaine G3 est imprégné d'un produit intumescent, par exemple celui commercialisé sous le nom commercial ORGOL FS par la Société américaine 3M.

Les corps souples A1, A2 et A3 sont réalisés par tout moyen connu, tel que moulage et injection. Les enroulements E2 et E3 sont collés sur les corps A2 et A3, par exemple à l'aide d'une colle silicone du type de celle commercialisée sous le nom commercial CAF 730 par la Société française RHONE-POULENC, ou bien solidarisés desdits corps A2 et A3 par injection à l'intérieur desdits enroulements préformés.

Les gaines G1, G2 et G3 comportent des fentes longitudinales F1, F2 ou F3, destinées à permettre la mise en place desdites gaines sur une conduite, par déformation élastique. L'extrémité libre L2 ou L3 de l'enroulement E2 ou E3 recouvre la fente F2 ou F3 et n'est pas solidarisée du reste dudit enroulement.

Dans les exemples considérés, les diamètres extérieurs D1, D2 et D3 des gaines G1, G2 et G3 sont égaux à 30 mm, tandis que les diamètres intérieurs d1, d2 et d3 respectifs sont égaux à 10 mm. Il en résulte que l'épaisseur el de la gaine G1 est égale à 10 mm. En ce qui concerne les gaines G2 et G3, leurs corps A2 et A3 ont une épaisseur e2 ou e3 de 8 mm et leurs enroulements E2 et E3 une épaisseur e'2 ou e'3 de 2 mm.

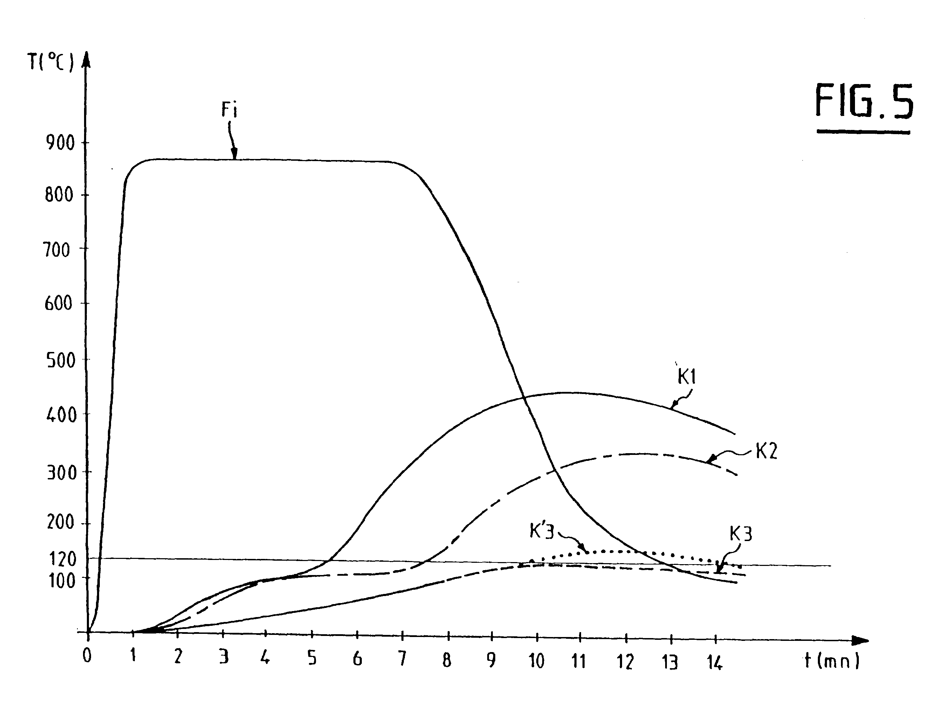

Pour tester les gaines G1, G2 et G3, on dispose d'un appareil (voir la figure 4) comportant un tube Tu (de diamètre extérieur égal à 10 mm) obturé à ses extrémités par des bouchons B, percés d'évents v, et une sonde de température S logée à l'intérieur dudit tube Tu et reliée à un thermomètre Th, sur lequel est affichée la température mesurée par ladite sonde S.

Sur le tube Tu, on peut mettre en place l'une ou l'autre des gaines G1, G2 et G3, en introduisant ledit tube Tu dans la fente F1, F2 ou F3. En ce qui concerne les gaines G2 et G3, les extrémités libres L2 et L3 sont solidarisées du reste de l'enroulement E2 ou E3 par collage à l'aide d'une colle au silicone, après mise en place sur le tube Tu, afin d'obturer les fentes F2 ou F3.

L'appareil d'expérimentation comporte de plus un brûleur BR (symbolisé par un rectangle en trait mixte sur la figure 4) susceptible de diriger sur la gaine G1, G2 ou G3, mise en place sur le tube Tu, et tout autour de celle-ci, des flammes à température contrôlée.

Sur la figure 5 (dont l'axe des abscisses porte le temps t en minutes, et dont l'axe des ordonnés porte les températures en degrés centigrades), on a représenté par la courbe Fi un exemple de feu appliqué aux gaines G1, G2 et G3 par le brûleur BR. Comme on peut le voir, la température T de cet exemple de feu Fi passe en une minute de la température ambiante à près de 900°C, se maintient à cette température pendant environ six minutes, puis décroît.

Les courbes K1, K2 et K3 de la figure 5 indiquent l'évolution de la température, mesurée par la sonde S à l'intérieur du tube Tu, respectivement lorsque les gaines G1, G2 et G3 sont soumises à l'exemple de feu Fi. Comme on peut le voir, avec les gaines G1 et G2, la température à l'intérieur du tube Tu s'approche de 450°C et 350°C, respectivement. En revanche, avec la gaine G3 conforme à l'invention, cette température reste inférieure à 120°C.

La courbe K'3 donne la variation de la température à l'intérieur du tube Tu pour une gaine, conforme à l'invention et pratiquement identique à la gaine G3, dans laquelle l'agent intumescent imprégnant l'enroulement E3 n'est pas pur, mais est mélangé à 15% en poids d'une colle silicone, destinée à assurer la solidarisation de l'enroulement E3 sur le corps souple A3.

On voit que l'incorporation de la colle silicone à l'agent intumescent imprégnant l'enroulement E3 (courbe K'3) est moins avantageuse que l'imprégnation de l'enroulement E3 avec l'agent intumescent pur, suivie du collage dudit enroulement sur le corps souple A3 (courbe K3). Toutefois, même dans ce cas moins avantageux, la température à l'intérieur du tube Tu ne dépasse pas 150°C, ce qui est à comparer avec les températures maximales atteintes par les courbes K1 et K2.

## Revendications

1. Dispositif de protection antifeu (G3), comportant un corps souple (A3) de matériau à propriétés endothermiques comprenant un liant de silicone et une charge libérant de la vapeur d'eau sous l'action du feu,
caractérisé en ce qu'il comporte, sur au moins la face dudit corps destinée à être dirigée vers le feu, au moins une couche (E3) d'un tissu constitué de fibres résistant au feu et imprégné d'un agent intumescent et en ce que ledit tissu imprégné présente, lorsqu'il est soumis à l'action du feu, une porosité suffisante pour être traversé par la vapeur engendrée par ledit matériau à propriétés endothermiques.

2. Dispositif selon la revendication 1, caractérisé en ce que ledit tissu est réalisé en fibres organiques préoxydées carbonisables.

3. Dispositif selon la revendication 2, caractérisé en ce que ledit tissu est du type à mailles.

4. Dispositif selon l'une des revendications 1 à 3, caractérisé en ce que ledit agent intumescent se présente, avant imprégnation dudit tissu, sous la forme d'un liquide aqueux et, après imprégnation et séchage, sous la forme d'un revêtement souple.

5. Dispositif selon l'une des revendications 1 à 4, caractérisé en ce que ledit tissu est solidarisé du corps par collage à l'aide d'une colle silicone.

6. Dispositif selon les revendications 4 et 5, caractérisé en ce que ladite colle silicone polymérise en présence d'eau.

7. Dispositif selon l'une des revendications 5 ou 6, caractérisée en ce que ladite colle silicone est mélangée audit agent intumescent, avant imprégnation dudit tissu.

8. Dispositif selon l'une des revendications 1 à 7, caractérisé en ce que ladite charge libérant de la vapeur d'eau sous l'action du feu est du phosphate trisodique à 12 molécules d'eau.

9. Dispositif selon l'une des revendications 1 à 8, caractérisé en ce que ledit corps souple comporte une charge réfractaire de renforcement.

10. Dispositif selon l'une des revendications 1 à 9, caractérisé en ce que la composition du matériau dudit corps souple est la suivante :
- liant élastomère de silicone 100 parties en poids
- TiO2 (charge réfractaire de renforcement) 7 parties en poids
- phosphate trisodique à 12 molécules d'eau 110 parties en poids
- catalyseur du liant élastomère 10 parties en poids.

## Claims

1. Device for protection against fire (G3), comprising a flexible body (A3) of material with endothermic properties comprising a silicone binder and a filler releasing water vapour under the effect of heat, characterized in that it comprises, on at least that face of the said body which is intended to be directed towards the fire, at least one layer (E3) of a fabric consisting of fire-resistant fibres and impregnated with an intumescent agent and in that the said impregnated fabric, when subjected to the effect of fire, exhibits a sufficient porosity to allow the vapour generated by the said material with endothermic properties to pass through.

2. Device according to Claim 1, characterized in that the said fabric is made of carbonizable preoxidized organic fibres.

3. Device according to Claim 2, characterized in that the said fabric is of the meshed type.

4. Device according to one of Claims 1 to 3, characterized in that, before impregnation of the said fabric, the said intumescent agent is in the form of an aqueous liquid and, after impregnation and drying, in the form of a flexible coating.

5. Device according to one of Claims 1 to 4, characterized in that the said fabric is integrally joined to the body by adhesive bonding with the aid of a silicone adhesive.

6. Device according to Claims 4 and 5, characterized in that the said silicone adhesive polymerizes in the presence of water.

7. Device according to either of Claims 5 and 6, characterized in that the said silicone adhesive is mixed with the said intumescent agent before impregnation of the said fabric.

8. Device according to one of Claims 1 to 7, characterized in that the said filler releasing water vapour under the effect of fire is trisodium phosphate containing 12 molecules of water.

9. Device according to one of Claims 1 to 8, characterized in that the said flexible body comprises a reinforcing refractory filler.

10. Device according to one of Claims 1 to 9, characterized in that the composition of the material of the said flexible body is the following:
- silicone elastomer binder 100 parts by weight
- TiO₂ (reinforcing refractory filler) 7 parts by weight
- trisodium phosphate containing 12 molecules of water 110 parts by weight
- catalyst for the elastomer binder 10 parts by weight.

## Patentansprüche

1. Feuerbeständige Vorrichtung (G3), die einen flexiblen Körper (A3) aus einem Material mit endothermischen Eigenschaften enthält, der ein Silikonbindemittel und ein unter der Einwirkung des Feuers Wasserdampf freisetzendes Füllmittel umfaßt, dadurch gekennzeichnet, daß es zumindest auf der Seite, die zum Feuer gerichtet werden soll, mindestens eine Schicht (E3) eines Gewebes umfaßt, das aus feuerbeständigen und mit einem Schwellmittel getränkten Fasern besteht, und dadurch, daß das genannte getränkte Gewebe, wenn es dem Feuer ausgesetzt wird, porös genug ist, daß der Dampf, der von genanntem Material mit endothermischen Eigenschaften freigesetzt wird, es durchströmen kann.

2. Vorrichtung gemäß Anspruch 1,
dadurch gekennzeichnet, daß das genannte Gewebe aus voroxidierten organischen verkohlbaren Fasern besteht.

3. Vorrichtung gemäß Anspruch 2,
dadurch gekennzeichnet, daß das genannte Gewebe ein Maschengewebe ist.

4. Vorrichtung gemäß einem der Ansprüche 1 bis 3, dadurch gekennzeichnet, daß das genannte Schwellmittel vor Tränkung des genannten Gewebes in Form einer wäßrigen Flüssigkeit und nach der Tränkung und Trocknung in Form eines flexiblen Überzugs vorliegt.

5. Vorrichtung gemäß einem der Ansprüche 1 bis 4, dadurch gekennzeichnet, daß das genannte Gewebe auf dem Körper durch Verkleben mit Hilfe eines Silikonklebers befestigt wird.

6. Vorrichtung gemäß den Ansprüchen 4 und 5, dadurch gekennzeichnet, daß der genannte Silikonkleber in Gegenwart von Wasser polymerisiert.

7. Vorrichtung gemäß einem der Ansprüche 5 oder 6, dadurch gekennzeichnet, daß der genannte Silikonkleber mit dem genannten Schwellmittel vor der Tränkung des genannten Gewebes vermischt wird.

8. Vorrichtung gemäß einem der Ansprüche 1 bis 7, dadurch gekennzeichnet, daß es sich bei dem genannten Füllmittel, das unter Einwirkung des Feuers Wasserdampf freisetzt, um Trinatriumphosphat mit 12 Wassermolekülen handelt.

9. Vorrichtung gemäß einem der Ansprüche 1 bis 8, dadurch gekennzeichnet, daß der genannte flexible Körper ein feuerfestes Verstärkungsfüllmittel enthält.

10. Vorrichtung gemäß einem der Ansprüche 1 bis 9, dadurch gekennzeichnet, daß die Zusammensetzung des Materials des genannten flexiblen Körpers folgende ist:
- Silikonelastomerbindemittel 100 Gewichtsteile
- TiO₂ (feuerfestes Verstärkungsfüllmittel) 7 Gewichtsteile
- Trinatriumphosphat mit 12 Wassermolekülen 110 Gewichtsteile
- Katalysator des Elastomerbindemittels 10 Gewichtsteile.
